# EUROPÄISCHE PATENTSCHRIFT

(11) **EP 0 772 740 B1**
(45) Veröffentlichungstag und Bekanntmachung des Hinweises auf die Patenterteilung: **04.10.2000**
(21) Anmeldenummer: 96905737.1
(22) Anmeldetag: 15.03.1996
(51) Int. Cl.: F04B 1/04, F04B 53/16

(54) **KOLBENPUMPE**
PISTON PUMP
POMPE A PISTON

(30) Priorität: 31.05.1995 DE 19519833
(43) Veröffentlichungstag der Anmeldung: 14.05.1997
(73) Patentinhaber: ROBERT BOSCH GMBH, 70442 Stuttgart (DE)
(72) Erfinder: MUELLER, Erwin, D-71272 Renningen (DE); ALAZE, Norbert, D-71706 Markgröningen (DE); WETZEL, Gerhard, D-70825 Korntal-Münchingen (DE); SCHMIDT, Klaus, D-71696 Möglingen (DE); OTT, Harald, D-71254 Ditzingen (DE)
(86) Internationale Anmeldenummer: DE9600466
(87) Internationale Veröffentlichungsnummer: WO9638669

(56) Entgegenhaltungen:
- DE-A- 4 133 391
- FR-A- 2 666 381
- US-A- 3 209 701

## Beschreibung

### Stand der Technik

Die Erfindung betrifft eine Kolbenpumpe mit den Merkmalen des Oberbegriffs des Hauptanspruchs, die als Rückförderpumpe für ein Hydraulikaggregat eines Antiblockierbremssystems und/oder als Förderpumpe einer Antriebsschlupfregelung für Kraftfahrzeuge vorgesehen ist.

Aus der DE 41 33 391 A1 ist eine derartige Kolbenpumpe bekannt. Infolge der Relativbewegung zwischen Kolben und Zylinder können sich während des Gebrauchs der bekannten Kolbenpumpe Laufspuren, also Aufrauhungen oder Riefen, an einem Kolbenumfang oder einer Zylinderbohrung während des Gebrauchs der Kolbenpumpe bilden. Diese Laufspuren können eine den Kolben gegen den Zylinder abdichtende Ringdichtung beschädigen, wenn sie durch die Hubbewegung des Kolbens mit ihr in Berührung gelangen.

### Vorteile der Erfindung

Bei der erfindungsgemäßen Kolbenpumpe mit den Merkmalen des kennzeichnenden Teils des Hauptanspruchs ist der Kolben in der Zylinderbohrung in axialer Richtung außerhalb des Bereichs geführt, der bei der Hubbewegung des Kolbens mit der Ringdichtung in Berührung gelangt. In dem Bereich, in dem die Ringdichtung mit dem Kolbenumfang oder der Zylinderbohrung in Berührung kommt, berühren Kolben und Zylinderbohrung bzw. ein in die Zylinderbohrung eingesetztes Füllstück einander nicht. Eine Dichtfläche am Kolben oder Zylinder, an welcher die Ringdichtung während der Hubbewegung des Kolbens entlanggleitet, ist von einer Kolbenführung getrennt. Auf diese Weise wird verhindert, daß Laufspuren in einem Bereich entstehen können, der mit der Ringdichtung in Berührung kommt. Dies gilt unabhängig davon, ob sich die Ringdichtung mit dem Kolben mitbewegt oder feststehend in die Zylinderbohrung eingesetzt ist.

Die Erfindung hat den Vorteil, daß die Ringdichtung während der Hubbewegung des Kolbens stets auf einer nur von ihr überstrichenen Gleit- und Dichtfläche gleitet, die infolgedessen ihren ursprünglichen, reibungsarmen Bearbeitungszustand während der gesamten Gebrauchsdauer der Kolbenpumpe beibehält. Die Ringdichtung wird nicht nennenswert abgenutzt und nicht beschädigt, eine gute Abdichtung zwischen Kolben und Zylinderbohrung ist auf nahezu unbegrenzte Zeit gewährleistet.

Die Unteransprüche betreffen Weiterbildungen und vorteilhafte Ausgestaltungen der erfindungsgemäßen Kolbenpumpe.

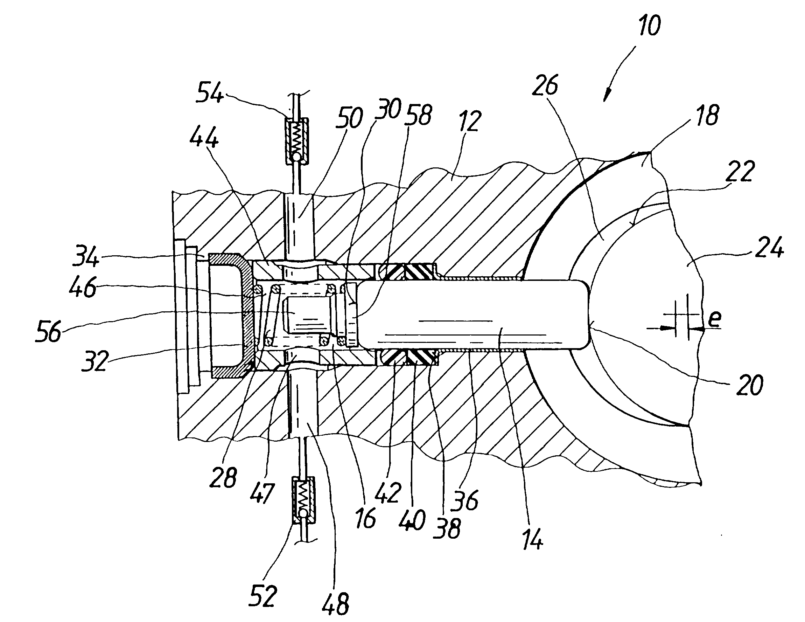

Die Erfindung wird nachfolgend anhand eines in der Zeichnung dargestellten Ausführungsbeispiels näher erläutert. Die einzige Figur zeigt einen Längsschnitt durch eine erfindungsgemäße Kolbenpumpe.

Die in der Figur dargestellte, erfindungsgemäße Kolbenpumpe 10 ist in einem Hydraulikblock 12 untergebracht, der zur hydraulischen Steuerung eines Antiblockiersystems und einer Antriebsschlupfregelung einer Kraftfahrzeug-Bremsanlage vorgesehen ist. Vom Hydraulikblock 12 ist nur der die Kolbenpumpe 10 aufnehmende Bereich dargestellt. Er bildet einen Zylinder 12 der erfindungsgemäßen Kolbenpumpe 10.

Ein Kolben 14 ist in seiner Längsrichtung verschiebbar in einer Zylinderbohrung 16 geführt. Im dargestellten Ausführungsbeispiel wird als Kolben 14 eine Rolle eines Nadellagers verwendet, die gehärtet, geschliffen und poliert ist. Dieser Kolben 14 ist sehr preiswert, da es sich um ein Massenfertigungsteil handelt. Er gewährleistet aufgrund seiner Oberflächengüte eine reibungsarme, sehr gute Dichtfläche.

Ein Ende des Kolbens 14 ragt in einen Exzenterzapfenraum 18 im Hydraulikblock 12 und stößt dort mit einer Stirnfläche 20 gegen eine Umfangsfläche 22 eines Exzenterzapfens 24, der mit einer Exzentrizität e einstückig an einem Stirnende einer Exzenterzapfenwelle 26 sitzt, die rechtwinklig zum Kolben 14 angeordnet und drehbar im Hydraulikblock 12 gelagert ist. Durch rotierenden Antrieb der Exzenterzapfenwelle 26 mittels eines in der Zeichnung nicht sichtbaren Elektromotors ist der Kolben 14 über den Exzenterzapfen 24 zu einer hin- und hergehenden Hubbewegung in der Zylinderbohrung 16 antreibbar.

Eine Schraubendruckfeder als Kolbenrückstellfeder 28 greift an einer dem Exzenterzapfen 24 abgewandten Stirnfläche 30 des Kolbens 14 an und hält diesen in Anlage an der Umfangsfläche 22 des Exzenterzapfens 24. Die Kolbenrückstellfeder 28 stützt sich gegen eine Verschlußkappe 32 ab, die in eine Mündung der Zylinderbohrung 16 an einer dem Exzenterzapfen 24 abgewandten Seite eingesetzt ist und die Zylinderbohrung 16 verschließt. Die Verschlußkappe 32 ist durch Verstemmen 34 des Hydraulikblocks 12 gehalten.

Sofern der Druck eines der erfindungsgemäßen Kolbenpumpe 10 zuströmenden Fluids zu deren Füllung und zum Rückstellen des Kolbens 14 ausreicht, kann auf die Kolbenrückstellfeder 28 verzichtet werden. Für eine selbstsaugende Kolbenpumpe 10 ist die Rückstellfeder 28 notwendig. Sie hat überdies den Vorteil, daß Sie den Kolben 14 in Anlage am Exzenterzapfen 24 hält und dadurch Klappergeräusche vermeidet, die ein ansonsten gegen den Exzenterzapfen 24 stoßender Kolben 14 verursachen könnte.

Der Kolben 14 kann unmittelbar in dem den Pumpenzylinder bildenden Hydraulikblock 12 gelagert sein. Im dargestellten Ausführungsbeispiel ist im Anschluß an den Exzenterraum 18 eine Führungshülse 36 in die Zylinderbohrung 16 eingepreßt. Diese besteht aus einem Gleitlagerwerkstoff. Zusammen mit dem gehärteten, geschliffenen und polierten Kolben 14 verringert die Führungshülse 36 Reibung und Verschleiß und sorgt damit für eine hohe Lebensdauer der erfindungsgemäßen Kolbenpumpe 10.

Nach einem Lager- und Führungsabschnitt, in dem sich die Führungshülse 36 befindet und der etwas kürzer als die Hälfte des Kolbens ist, erweitert sich die Zylinderbohrung 16 an einer Ringstufe 38 auf einer dem Exzenterzapfenraum 18 abgewandten Seite. Anschließend an die Ringstufe 38 ist ein Kunststoff-Stützring 40 und an diesen anschließend eine Ringdichtung 42 den Kolben 14 umschließend in den erweiterten Raum der Zylinderbohrung 16 eingesetzt. Die Ringdichtung 42 ist ein 0-Ring aus einem Elastomer.

Die Breite des Stützrings 40, also dessen Erstreckung in axialer Richtung des Kolbens 14, ist geringfügig größer als eine Hublänge des Kolbens 14, die der doppelten Exzentrizität e entspricht. Auf diese Weise wird verhindert, daß die Ringdichtung 42 mit Laufspuren des Kolbens 14 in Berührung kommen kann, die aufgrund dessen hin- und hergehender Bewegung in dem Bereich entstehen können, in dem der Kolben 14 in der Zylinderbohrung 16 geführt ist. Laufspuren sind Rauhigkeiten oder Riefen infolge der Relativbewegung zwischen Kolben 14 und Zylinder 12. Eine Umfangsfläche des Kolbens 14 in einem von der Ringdichtung 42 überstrichenen Bereich (Dichtfläche) bleibt auf diese Weise dauerhaft so glatt, wie sie hergestellt worden ist. Durch den geschliffenen und polierten Kolben ergibt sich somit eine reibungs- und verschleißarme, dauerhafte Abdichtung zwischen Kolben 14 und Zylinder 12.

Zwischen der Ringdichtung 42 und der Verschlußkappe 32 ist ein hohlzylindrisches Kunststoff-Füllstück 44 in die Zylinderbohrung 16 eingesetzt, dessen Innendurchmesser etwas Spiel zum Kolbendurchmesser aufweist. Dieses Füllstück 44 verkleinert einen Totraum und erhöht auf diese Weise die Effektivität der erfindungsgemäßen Kolbenpumpe 10. Ein Verdrängungsraum 46 der Kolbenpumpe 10 befindet sich im Innern des Kunststoff-Füllstücks 44. Des weiteren wird zwischen dem Kunststoff-Füllstück 44 und dem Stützring 40 auf einfache Weise eine Nut für die Ringdichtung 42 gebildet. Die Zylinderbohrung 16 mit im wesentlichen nur einer Ringstufe 38 ist einfach herstellbar, die Montage der Ringdichtung 42 erfolgt mit minimalem Aufwand durch Einschieben in die Zylinderbohrung 16 zusammen mit dem Stützring 40 und dem Kunststoff-Füllstück 44.

Das Kunststoff-Füllstück 44 ist mit einer durchgehenden Querbohrung 47 versehen, die mit einer Einlaßbohrung 48 und einer Auslaßbohrung 50 des Hydraulikblocks 12 kommuniziert, die zwischen der Verschlußkappe 32 und der ihr zugewandten Stirnfläche 30 des Kolbens 14 in die Zylinderbohrung 16 münden. In die Einlaßbohrung 48 und die Auslaßbohrung 50 ist je ein Rückschlagventil als Einlaßventil 52 bzw. Auslaßventil 54 eingesetzt.

In der als Schraubendruckfeder ausgebildeten Kolbenrückstellfeder 28 ist ein zylindrischer Verdrängungskörper 56 angeordnet, der das Volumen des Verdrängungsraums 46 und zugleich den Totraum weiter verkleinert und dadurch die Effektivität der erfindungsgemäßen Kolbenpumpe 10 zusätzlich steigert. Dieser Verdrängungskörper 56 weist einen zwischen die Kolbenrückstellfeder 28 und den Kolben 14 eingelegten Flansch 58 auf. Die Kolbenrückstellfeder 28 drückt den Flansch 58 des Verdrängungskörpers 56 gegen die ihr zugewandte Stirnfläche 30 des Kolbens 14 und über den Flansch 58 den Kolben 14 gegen die Umfangsfläche 22 des Exzenterzapfens 24. Der Verdrängungskörper 56 ist so kurz, daß er bei der Hubbewegung des Kolbens 14 nicht gegen die Verschlußkappe 32 stößt. Er könnte anstatt am Kolben 14 an der Verschlußkappe 32 angeordnet werden. Der Verdrängungskörper 56 dient auch als Knickschutz für die Kolbenrückstellfeder 28.

Die Zylinderbohrung 16 ist, sofern keine Führungshülse 36 in sie eingepreßt ist, in ihrem Führungsbereich für den Kolben 14 gerieben, um eine reibungs- und verschleißarme Kolbenlagerung und -führung zu erzielen. Der Stützring 40 kann an einer Stelle seines Umfangs geschlitzt oder, wie im dargestellten Ausführungsbeispiel durchgehend ausgebildet sein.

## Patentansprüche

1. Kolbenpumpe mit einem in einem Zylinder zu einer hin- und hergehenden Hubbewegung antreibbaren Kolben und mit einer Ringdichtung, die eine Kolbenumfangsfläche gegen eine Zylinderbohrung abdichtet, **dadurch gekennzeichnet,** daß der Kolben (14) in einem Bereich, der sich in axialer Richtung über die Ringdichtung (42) hinweg in beide Richtungen mindestens um eine Kolbenhublänge erstreckt, einen radialen Abstand von der Zylinderbohrung (16) aufweist.

2. Kolbenpumpe nach Anspruch 1, **dadurch gekennzeichnet,** daß sie an einer Seite der Ringdichtung (42) einen Stützring (40) aufweist, dessen Breite größer als die Kolbenhublänge ist.

3. Kolbenpumpe nach Anspruch 1 oder 2, **dadurch gekennzeichnet,** daß sie ein in einen Verdrängungsraum (46), der Teil der Zylinderbohrung (16) ist, eingesetztes Füllstück (44) aufweist, das eine ringförmige Nutwangenfläche einer umlaufenden Nut für die Ringichtung (42) bildet.

4. Kolbenpumpe nach einem der Ansprüche 1 bis 3, **dadurch gekennzeichnet,** daß sie eine im Verdrängungsraum (46) angeordnete Kolbenrückstellfeder (28) und einen in der Kolbenrückstellfeder (28) angeordneten Verdrängungskörper (56) aufweist.

5. Kolbenpumpe nach einem der Ansprüche 1 bis 4, **dadurch gekennzeichnet,** daß in die Zylinderbohrung (16) außerhalb des Bereichs, innerhalb dessen der Kolben (14) einen radialen Abstand von der Zylinderbohrung (16) aufweist, eine Führungshülse (36) für den Kolben (14) eingesetzt ist.

6. Kolbenpumpe nach einem der Ansprüche 1 bis 5, **dadurch gekennzeichnet,** daß eine Nadelrolle eines Nadellagers den Kolben (14) bildet.

## Claims

1. Piston pump having a piston, which can be driven in a cylinder to perform a reciprocating stroke movement, and an annular seal which seals off a piston circumferential surface from a cylinder bore, characterized in that, in a region which extends axially beyond the annular seal (42) in both directions by at least a piston stroke length, the piston (14) is at a radial distance from the cylinder bore (16).

2. Piston pump according to Claim 1, characterized in that it has a supporting ring (40) on one side of the annular seal (42), the width of which supporting ring (40) is greater than the piston stroke length.

3. Piston pump according to Claim 1 or 2, characterized in that it has a filling piece (44), which is inserted into a displacement space (46) and forms an annular groove side wall surface of an encircling groove for the annular seal (42), the displacement space (46) being part of the cylinder bore (16) .

4. Piston pump according to one of Claims 1 to 3, characterized in that it has a piston return spring (28), arranged in the displacement space (46), and a displacement body (56) arranged in the piston return spring (28) .

5. Piston pump according to one of Claims 1 to 4, characterized in that a guide sleeve (36) for the piston (14) is inserted into the cylinder bore (16) outside the region within which the piston (14) is at a radial distance from the cylinder bore (16).

6. Piston pump according to one of Claims 1 to 5, characterized in that a needle roller of a needle bearing forms the piston (14).

## Revendications

1. Pompe à piston, comprenant un piston qui peut être entraîné dans un cylindre selon un mouvement alternatif de va et vient, et un joint d'étanchéité annulaire, qui assure l'étanchéité entre de la surface périphérique du piston par rapport à l'alésage d'un cylindre,
caractérisée en ce que
le piston (14) présente, dans une zone qui s'étend dans le sens axial au-delà du joint d'étanchéité annulaire (42) dans les deux sens au moins sur une longueur correspondant à la course du piston, un certain écartement radial par rapport à l'alésage du cylindre (16).

2. Pompe à piston selon la revendication 1,
caractérisée en ce qu'
elle présente sur un côté du joint d'étanchéité annulaire (42) une bague d'appui (40), dont la largeur est plus grande que la longueur de la course du piston.

3. Pompe à piston selon la revendication 1 ou 2,
caractérisée en ce qu'
elle présente une pièce intercalaire (44) insérée dans une chambre de refoulement (46), qui fait partie de l'alésage (16) du cylindre, et qui constitue les joues de forme annulaire d'une rainure qui fait tout le tour pour le joint d'étanchéité annulaire (42).

4. Pompe à piston selon l'une des revendications 1 à 3,
caractérisée en ce qu'
elle présente un ressort de rappel (28) du piston disposé dans la chambre de refoulement (46) et un corps de refoulement (56) disposé dans le ressort de rappel (28) du piston.

5. Pompe à piston selon l'une des revendications 1 à 4,
caractérisée en ce qu'
un manchon de guidage (36) pour le piston (14) est inséré dans l'alésage (16) du cylindre en dehors de la zone, à l'intérieur de laquelle le piston (14) présente une certaine distance radiale par rapport à l'alésage du cylindre (16).

6. Pompe à piston selon l'une des revendications 1 à 5,
caractérisée en ce que
un galet de roulement à aiguilles constitue le piston (14).
